# EUROPEAN PATENT SPECIFICATION

(11) **EP 3 065 361 B1**
(45) Date of publication and mention of the grant of the patent: **29.05.2019**
(21) Application number: 13896680.9
(22) Date of filing: 29.10.2013
(51) Int. Cl.: H04L 25/03

(54) **DIGITAL INTERFERENCE CANCELLATION APPARATUS AND METHOD FOR WIRELESS FULL DUPLEX SYSTEM AND TRANSCEIVER**
DIGITALE INTERFERENZUNTERDRÜCKUNGSVORRICHTUNG UND VERFAHREN FÜR DRAHTLOSES VOLLDUPLEXSYSTEM UND SENDER-EMPFÄNGER
APPAREIL ET PROCÉDÉ D'ANNULATION DE BROUILLAGE NUMÉRIQUE POUR UN SYSTÈME SANS FIL EN DUPLEX INTÉGRAL, ET ÉMETTEUR-RÉCEPTEUR

(43) Date of publication of application: 07.09.2016
(73) Proprietor: Huawei Technologies Co., Ltd., Longgang District Shenzhen, Guangdong 518129 (CN)
(72) Inventor: CHEN, Teyan, Shenzhen Guangdong 518129 (CN); LIU, Sheng, Shenzhen Guangdong 518129 (CN); CHENG, Hong, Shenzhen Guangdong 518129 (CN)
(74) Representative: Isarpatent
(86) International application number: PCT/CN2013/086137
(87) International publication number: WO 2015/061963

(56) References cited:
- EP-A2- 0 957 587
- WO-A2-2008/058059
- CN-A- 101 420 246
- CN-A- 103 338 172
- US-A1- 2007 230 547
- US-A1- 2012 201 153
- US-B1- 8 422 540
- MOHAMMAD A KHOJASTEPOUR ET AL: "Wideband digital cancellation for full-duplex communications", ASILOMAR CONFERENCE ON SIGNALS, SYSTEMS AND COMPUTERS. CONFERENCE RECORD, IEEE COMPUTER SOCIETY, US, 4 November 2012 (2012-11-04), pages 1300-1304, XP032351092, ISSN: 1058-6393, DOI: 10.1109/ACSSC.2012.6489234 ISBN: 978-1-4673-5050-1

## Description

### TECHNICAL FIELD

The present invention relates to the technical field of communications, and in particular to digital interference cancellation apparatus and method and a transceiver of a wireless full duplex system.

### BACKGROUND

In a wireless communication system such as a mobile cellular communication system, WLAN (Wireless Local Area Network, wireless local area network), FWA (Fixed Wireless Access, fixed wireless access), etc., a communication node such as a BS (Base Station, base station), an AP (Access Point, access point), a RS (Relay Station, relay station), a UE (User Equipment, user equipment) or the like generally has an ability of transmitting its own signals and receiving signals of other communication nodes.

Since a wireless signal is greatly attenuated in a wireless channel, and compared to a transmitted signal, a signal received from a communication peer has become very weak when arriving at a receiving end. For example, a power difference between a transmitted signal and a received signal of a communication node in the mobile cellular communication system reaches 80dB to 140dB, or even larger. Therefore, in order to avoid self-interference of a transmitted signal to a received signal of a same transceiver, different frequency bands or different time slots are generally adopted to distinguish transmission and reception of wireless signals. For example, in FDD (Frequency Division Duplex, frequency division duplex), transmission and reception use different frequency bands separated by a certain protection frequency band for respective communications; and in TDD (Time Division Duplex, time division duplex), transmission and reception use different time slots separated by a certain protection time for respective communications. The protection frequency band in the FDD system and the protection time slot in the TDD system are both used for ensuring sufficient isolation between reception and transmission, and for avoiding generation of interference from a sending signal to a receiving signal.

In wireless full duplex technologies, a same transceiver may be used to perform a signal receiving operation and a signal sending operation simultaneously on a same wireless channel. In this way, a frequency spectrum effect of the wireless full duplex technology theoretically is twice of that of the FDD or TDD technology.

US patent 8422540B1 discloses an intelligent backhaul radio (IBR), in which the transmit chain signals from the IBR transmit antenna array that undesirably leak in to the receive chains is cancelled. Isolation of the desired receive signals from transmitted signals is accomplished utilizing a combination of active cancellation and inherent isolation between the IBR transmit antenna array and the IBR receive antenna array. The various isolating features and functions are referred to as Isolation Loops or Cancellation Loops. Specifically, the isolation loop L0 is mainly indicative the finite isolation between any two antennas; the canceller loop L1 samples the actual transmitted RF signal in each Tx chain and then generates for each Rx chain a modified cancellation signal C1n that when summed with the Rx chain signals before input to the downconverters substantially cancels the Tx signals that have leaked into the Rx antennas; the canceller Loop L2 also samples the transmitted RF signals and processes Tx signals in the digital baseband domain using FIR digital filter techniques; and the canceller Loop L3 is very different from L1 or L2 in that it takes a digital baseband representation of each Tx chain signal as an input.

However, since a same wireless channel is used for receiving and sending signals, interference (referred to as self-interference, Self-interference) from a transmitting signal to the receiving signal in a wireless full duplex transceiver is relatively strong, and certain influence is generated on correct reception of a useful signal.

### SUMMARY

Embodiments of the present invention provide digital interference cancellation apparatus and method as well as a transceiver of a wireless full duplex system with the features of the independent claims, which are able to effectively eliminate a self-interference signal in a digital receiving signal in a complex communication environment.

In one aspect, a digital interference cancellation apparatus is provided, and the apparatus is applied to a transceiver of a wireless full duplex system;
the digital interference cancellation apparatus includes: a first interference cancellation module and a second interference cancellation module;
the first interference cancellation module is configured to receive a digital transmission signal output by the transceiver as a digital baseband reference signal, reconstruct a first self-interference signal by up_sampling, filtering and then down-sampling the digital baseband reference signal, subtract the first self-interference signal from a digital receiving signal received from the transceiver to obtain a digital receiving signal after a first stage of interference cancellation, and send the digital receiving signal after the first stage of interference cancellation to the second interference cancellation module; and
the second interference cancellation module is configured to receive the digital transmission signal output by the transceiver as the digital baseband reference signal, reconstruct a second self-interference signal by filtering using the digital baseband reference signal, subtract the second self-interference signal from the digital receiving signal after the first stage of interference cancellation to obtain a digital receiving signal after a second stage of interference cancellation, and send the digital receiving signal after the second stage of interference cancellation to the transceiver;
wherein the first self-interference signal is a near field self-interference signal, and the second self-interference signal is a far field self-interference signal.

In a second aspect, a digital interference cancellation method for a transceiver of a wireless full duplex system is provided, including:
receiving a digital transmission signal output by the transceiver as a digital baseband reference signal;
reconstructing a first self-interference signal by up-sampling, filtering and then down-sampling the digital baseband reference signal;
subtracting the first self-interference signal from a digital receiving signal received from the transceiver to obtain a digital receiving signal after a first stage of interference cancellation;
reconstructing a second self-interference signal by filtering the digital baseband reference signal; and
subtracting the second self-interference signal from the digital receiving signal after the first stage of interference cancellation to obtain a digital receiving signal after a second stage of interference cancellation, and sending the digital receiving signal after the second stage of interference cancellation to the transceiver;
wherein the first self-interference signal is a near field self-interference signal, and the second self-interference signal is a far field self-interference signal.

In a third aspect, a transceiver of a wireless full duplex system is provided, wherein the transceiver includes the digital interference cancellation apparatus of any of the first aspect or any implementation manner of the first aspect.

In a fourth aspect, a wireless full duplex system is provided, including the transceiver of the third aspect.
Compared to the prior art, the digital interference cancellation apparatus in the embodiments of the present invention adopts a two-stage self-interference signal reconstruction solution, first reconstructs a near field self-interference signal by using the digital baseband reference signal, subtracts the near field self-interference signal from the digital receiving signal to achieve a first stage of interference cancellation for the digital receiving signal and to eliminate the near field self-interference in the digital receiving signal, and then reconstructs a far field self-interference signal by using the digital baseband reference signal, and subtracts the far field self-interference signal from the digital receiving signal after the first stage of interference cancellation to achieve a second stage of interference cancellation for the digital receiving signal and to eliminate the far field self-interference in the digital receiving signal.

Therefore, the digital interference cancellation apparatus in the embodiments of the present invention respectively reconstructs the near field self-interference signal and the far field self-interference signal respectively through two-stage interference cancellation modules, which can effectively eliminate the near field self-interference and the far field self-interference in the digital receiving signal to obtain a good self-interference cancellation effect, guarantee correct reception of a useful signal, and improve working performance of the transceiver of the wireless full duplex system.

### BRIEF DESCRIPTION OF DRAWINGS

To illustrate technical solutions in the embodiments of the present invention or in the prior art more clearly, a brief introduction on the accompanying drawings which are needed in the description of the embodiments or the prior art is given below. Apparently, the accompanying drawings in the description below are merely some of the embodiments of the present invention, based on which other drawings may be obtained by those of ordinary skill in the art without any creative effort.
FIG. 1 is a structure diagram of a transceiver of a wireless full duplex system in an embodiment of the present invention;
FIG. 2 is a structure diagram of a digital interference cancellation apparatus in embodiment one of the present invention;
FIG. 3 is a structure diagram of a digital interference cancellation apparatus in embodiment two of the present invention;
FIG. 4 is a structure diagram of a digital interference cancellation apparatus in embodiment three of the present invention;
FIG. 5 is a flowchart of a digital interference cancellation method for a transceiver of a wireless full duplex system in an embodiment of the present invention.

### DESCRIPTION OF EMBODIMENTS

A clear and complete description of technical solutions in the embodiments of the present invention will be given below, in combination with the accompanying drawings in the embodiments of the present invention. Apparently, the embodiments described below are merely a part, but not all, of the embodiments of the present invention. All of other embodiments, obtained by those of ordinary skill in the art based on the embodiments of the present invention without any creative effort, fall into the protection scope of the present invention.

The embodiments of the present invention provide digital interference cancellation apparatus and method as well as a transceiver of a wireless full duplex system, which can effectively eliminate a self-interference signal in a digital receiving signal in a complex communication environment.

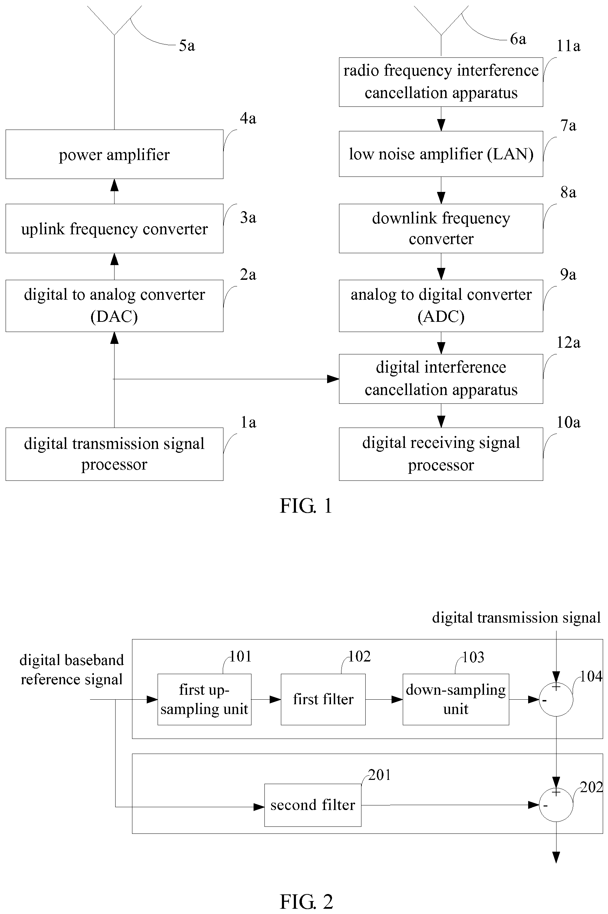

Referring to FIG. 1, which is a structure diagram of a transceiver of a wireless full duplex system in an embodiment of the present invention. An application scenario of the digital interference cancellation apparatus and method in the embodiments of the present invention is introduced below in combination with FIG. 1.

The wireless full duplex system uses a same transceiver to perform a signal receiving operation and a signal sending operation. As shown in FIG. 1, the transceiver includes a transmission channel and a receiving channel.

The transmission channel includes a digital transmission signal processor 1a, a DAC (Digital to Analog Converter, digital to analog converter) 2a, an uplink frequency converter 3a, a power amplifier 4a and a transmitting antenna 5a, which are sequentially connected.

The digital transmission signal processor 1a generates a digital transmission signal. The digital transmission signal is converted by the DAC 2a into an analog transmission signal. After being successively processed by the uplink frequency converter 3a and the power amplifier 4a, the analog transmission signal is delivered to the transmitting antenna 5a for transmission.

The receiving channel includes a receiving antenna 6a, an LNA (Low Noise Amplifier, low noise amplifier) 7a, a downlink frequency converter 8a, an ADC (Analog to Digital Converter, analog to digital converter) 9a and a digital receiving signal processor 10a, which are sequentially connected.

The receiving antenna 6a receives an external analog receiving signal. After being successively processed by the LNA and the downlink frequency converter 8a, the analog receiving signal is delivered to the ADC 9a, where the analog receiving signal is converted into a digital receiving signal. The ADC 9a outputs the digital receiving signal to the digital receiving signal processor 10a.

It can be seen from FIG. 1 that, self-interference signals in the wireless full duplex system mainly include a primary path self-interference signal, a self-interference signal reflected by a near field and a self-interference signal reflected by a far field.

The primary path self-interference signal is a main interference source of the wireless full duplex system, and the primary path self-interference signal may be eliminated generally by providing a radio frequency interference cancellation apparatus 11a between the receiving antenna 6a and the LNA 7a of the receiving channel, as shown in FIG. 1. Residual self-interference signals after cancellation of the radio frequency interference cancellation apparatus 11a are mainly reflected (including near-field reflected and far-field reflected) self-interference signals.

A digital interference cancellation apparatus 12a of the embodiment of the present invention is configured to further cancel the above residual self-interference signal(s).

As shown in FIG. 1, the digital interference cancellation apparatus 12a is arranged between the digital receiving signal processor 10a and the ADC 9a.

A first input end of the digital interference cancellation apparatus 12a is connected to an output end of the ADC 9a, a second input end of the digital interference cancellation apparatus 12a is connected to an output end of the digital transmission signal processor 1a, and an output end of the digital interference cancellation apparatus 12a is connected to an input end of the digital receiving signal processor 10a.

The digital interference cancellation apparatus 12a includes a first interference cancellation module and a second interference cancellation module.

The first interference cancellation module is configured to receive a digital transmission signal output by the digital transmission signal processor 1a as a digital baseband reference signal, reconstruct a first self-interference signal by using the digital baseband reference signal, subtract the reconstructed first self-interference signal from a digital receiving signal received from the ADC 9a to obtain a digital receiving signal after a first stage of interference cancellation, and send the digital receiving signal after the first stage of interference cancellation to the second interference cancellation module.

The second interference cancellation module is configured to receive the digital transmission signal output by the digital transmission signal processor 1a as a digital baseband reference signal, reconstruct a second self-interference signal by using the digital baseband reference signal, subtract the reconstructed second self-interference signal from the digital receiving signal after the first stage of interference cancellation to obtain a digital receiving signal after a second stage of interference cancellation, and send the digital receiving signal after the second stage of interference cancellation to the digital receiving signal processor 10a.

It should be illustrated that, in the method of the embodiment of the present invention, the first self-interference signal is generally a near field self-interference signal, and the first interference cancellation module may be used for achieving elimination of a near field self-interference signal. The second self-interference signal is generally a far field self-interference signal, and the second interference cancellation module may be used for achieving elimination of a far field self-interference signal.

In the embodiment of the present invention, the digital interference cancellation apparatus 12a adopts a two-stage self-interference signal reconstruction solution, in which the first self-interference signal is first reconstructed by using the digital baseband reference signal, and the reconstructed first self-interference signal is subtracted from the digital receiving signal, which achieves a first stage of interference cancellation for the digital receiving signal, and eliminates near field self-interference in the digital receiving signal; and the second self-interference signal is then reconstructed by using the digital baseband reference signal, and the reconstructed second self-interference signal is subtracted from the digital receiving signal after the first stage of interference cancellation, which achieves a second stage of interference cancellation for the digital receiving signal, and eliminates far field self-interference in the digital receiving signal.

Therefore, the digital interference cancellation apparatus 12a in the embodiment of the present invention reconstructs the near field self-interference signal and the far field self-interference signal respectively through two-stage interference cancellation modules, which can effectively eliminate the near field self-interference and the far field self-interference in the digital receiving signal to obtain a good self-interference cancellation effect, guarantee correct reception of a useful signal, and improve working performance of the transceiver of the wireless full duplex system.

Referring to FIG. 2, which is a structure diagram of a digital interference cancellation apparatus in embodiment one of the present invention. As shown in FIG. 2,

The first interference cancellation module 10 may include a first up-sampling unit 101, a first filter 102, a down-sampling unit 103 and a first subtractor 104.

A positive input end of the first subtractor 104 is connected to a first input end of the digital interference cancellation apparatus 12a.

An input end of the first up-sampling unit 101 is connected to a second input end of the digital interference cancellation apparatus 12a, and an output end of the first up-sampling unit 101 is connected to an input end of the first filter 102.

An output end of the first filter 102 is connected to an input end of the down-sampling unit 103, an output end of the down-sampling unit 103 is connected to a negative input end of the first subtractor 104, and an output end of the first subtractor 104 is served as an output end of the first interference cancellation module.

The first up-sampling unit 101 is configured to receive a digital transmission signal output by the digital transmission signal processor 1a as a digital baseband reference signal, up-sample the digital baseband reference signal, and output a first reference signal to the first filter 102, wherein a sampling rate of the first up-sampling unit 101 is larger than an original sampling rate of the digital transmission signal, namely a sampling rate of the ADC 9a.

The first filter 102 is configured to receive the first reference signal, reconstruct a third self-interference signal, and send the third self-interference signal to the down-sampling unit 103.

The down-sampling unit 103 is configured to down-sample the third self-interference signal to obtain a first self-interference signal, and send the first self-interference signal to the first subtractor 104, wherein a sampling rate of the down-sampling unit 103 and a sampling rate of the first up-sampling unit 101 are reciprocals of each other.

The first subtractor 104 is configured to receive the digital receiving signal output by the ADC 9a, subtract the first self-interference signal from the digital receiving signal to obtain a digital receiving signal after a first stage of interference cancellation, and send the digital receiving signal after the first stage of interference cancellation to the second interference cancellation module 20.

It should be illustrated that the first interference cancellation module may be used for achieving elimination of a near field self-interference signal. In this case, the first filter 102 is usually a high-speed filter, and is configured to filter the up-sampled digital baseband reference signal (i.e., the first reference signal) to reconstruct the third self-interference signal, and then down-sample the third self-interference signal to obtain the first self-interference signal (i.e., the near field self-interference signal).

The second interference cancellation module 20 may include a second filter 201 and a second subtractor 202.

An input end of the second filter 201 is connected to a second input end of the digital interference cancellation apparatus 12a, and an output end of the second filter 201 is connected to a negative input end of the second subtractor 202.

A positive input end of the second subtractor 202 is connected to an output end of the first interference cancellation module 10 (i.e., the output end of the first subtractor 104), and an output end of the second subtractor 202 is connected to an output end of the digital interference cancellation apparatus 12a.

The second filter 201 is configured to reconstruct a second self-interference signal by using the digital baseband reference signal, and send the second self-interference signal to the second subtractor 202.

The second subtractor 202 is configured to subtract the second self-interference signal from the digital receiving signal after the first stage of interference cancellation to obtain a digital receiving signal after a second stage of interference cancellation, and send the digital receiving signal after the second stage of interference cancellation to the digital receiving signal processor 10a.

It should be illustrated that the second interference cancellation module may be used for achieving elimination of a far field self-interference signal, and in this case, the second filter 201 is generally a low-speed filter and is used for directly filtering the digital baseband reference signal to reconstruct the second self-interference signal (i.e., the far field self-interference signal).

After the digital interference cancellation apparatus 12a in the embodiment of the present invention up-samples the digital baseband reference signal, the digital interference cancellation apparatus 12a reconstructs a near field self-interference signal through the first filter 102, subtracts the reconstructed near field self-interference signal from the digital receiving signal after down-sampling the reconstructed near field self-interference signal, which achieves the first stage of interference cancellation for the digital receiving signal, and eliminates near field self-interference in the digital receiving signal. A far field self-interference signal is then reconstructed through the second filter 201 by using the digital baseband reference signal, and the reconstructed far field self-interference signal is subtracted from the digital receiving signal after the first stage of interference cancellation, which achieves the second stage of interference cancellation for the digital receiving signal, and eliminates far field self-interference in the digital receiving signal.

Therefore, the digital interference cancellation apparatus 12a in the embodiment of the present invention reconstructs the near field self-interference signal and the far field self-interference signal respectively through two-stage interference cancellation modules, which can effectively eliminate the near field self-interference and the far field self-interference in the digital receiving signal to obtain a good self-interference cancellation effect, guarantee correct reception of a useful signal, and improve working performance of the transceiver of the wireless full duplex system.

It should be first illustrated that, up-sampling and down-sampling both are well-known technical means in the art, and both are re-sampling of a digital signal. Specifically, up-sampling refers to that a sampling rate of re-sampling of an up-sampling unit is larger than an original sampling rate of a digital signal received by the up-sampling unit; and down-sampling refers to that a sampling rate of re-sampling of a down-sampling unit is smaller than an original sampling rate of a digital signal received by the down-sampling unit.

In combination with the embodiment of the present invention, the digital baseband reference signal and the digital receiving signal have a same original sampling rate. As shown in FIG. 1, the digital receiving signal is obtained by the ADC 9a by sampling and converting a digital analog signal. Therefore, a sampling rate of the ADC 9a is an original sampling rate of the digital receiving signal and the digital baseband reference signal. In the embodiment of the present invention, up-sampling the digital baseband reference signal refers to that a sampling rate of first up-sampling unit 10 is larger than the original sampling rate of the received digital baseband reference signal, namely larger than the sampling rate of the ADC 9a.

Correspondingly, the signal received by the down-sampling unit 30 is the digital baseband reference signal (referred to as a first digital baseband reference signal) after being up-sampled by the first up-sampling unit 10. Therefore, the sampling rate of the down-sampling unit 30 is smaller than the original sampling rate of the received first digital baseband reference signal. Specifically, the sampling rate of the down-sampling unit 30 may be equal to the sampling rate of the ADC 9a. Moreover, the sampling rate of the first up-sampling unit 10 and the sampling rate of the down-sampling unit 30 are reciprocals of each other.

A working principle of the apparatus of the embodiment of the present invention is introduced below in detail.

In the embodiment of the present invention, the first filter 102 is configured to reconstruct multipath propagated self-interference signal(s) in a near field. This is because a difference between propagation distances of different reflection paths within the near field is relatively small (generally within 1m), namely, a delay between digital signals transmitted by different paths is smaller than 3ns. To distinguish the self-interference signals passing through these paths, a sampling period as short as possible needs to be adopted (for example, the sampling period is smaller than 3ns). Hence, the digital baseband reference signal needs to be up-sampled to improve the sampling rate of the digital baseband reference signal (for example, the sampling rate is larger than 300Msps).

In the embodiment of the present invention, the original sampling rate of the digital receiving signal is the sampling rate of the ADC 9a. For example, the sampling rate of an existing ADC 9a is generally 100-250Msps. In this case, the digital baseband reference signal may be up-sampled to 400 Msps, so that a sampling period of the up-sampled digital baseband reference signal is 2.5ns, which satisfies a requirement of a high-speed filter 20 for reconstructing the near field self-interference signal.

It should be illustrated that, reconstructing the first self-interference signal by the first filter 102 may includes: generating, by the first filter 102 with a sampling period of the first reference signal as a delay unit of a tap, an impulse response of a first self-interference channel, and filtering the first reference signal by using the impulse response to reconstruct the first self-interference signal.

Specifically, the first filter 102 may include a first receiving unit, a first coefficient obtaining unit, a first filtering unit and a first sending unit.

The first receiving unit is configured to receive the first reference signal and send the first reference signal to the first filtering unit.

The first coefficient obtaining unit is configured to obtain a first filtering coefficient and send the first filtering coefficient to the first filtering unit.

The first filtering unit is configured to filter, in combination with the first filtering coefficient by taking a sampling period of the first reference signal as a delay step of a tap delay line, the first reference signal to reconstruct the third self-interference signal, wherein a sampling period of the first reference signal is equal to a reciprocal of a sampling rate of the first up-sampling unit.

The first sending unit is configured to send the third self-interference signal to the down-sampling unit.

For example, when the sampling period of the first reference signal is 2.5ns, the first filter 102 may takes 2.5ns as the delay step of the tap delay line, filter the first reference signal in combination with the corresponding filter coefficient to reconstruct the third self-interference signal.

Further, considering that a reflection path within the near field is generally within 10m, namely a latency of multipath propagation is generally within 30ns, in order to cover the multipath propagated self-interference signals as many as possible, 10 to 20 (which may be obtained by dividing a delay by a sampling period, such as, for example, 30ns/2.5ns) taps need to be set in the first filter 102 to reconstruct the self-interference signals in the near field.

It should be illustrated that, the filtering coefficient of the first filter 102 may be preset according to actual demand, or may be estimated by using a certain algorithm.

Specifically, since a change of propagation environment in the near field for a transceiving antenna is relatively small, changes of an amplitude and a delay of a near field self-interference signal with time are relatively small and slow, the first filtering coefficient may be estimated by using an adaptive filtering algorithm, and reconstruction of the near field self-interference is achieved.

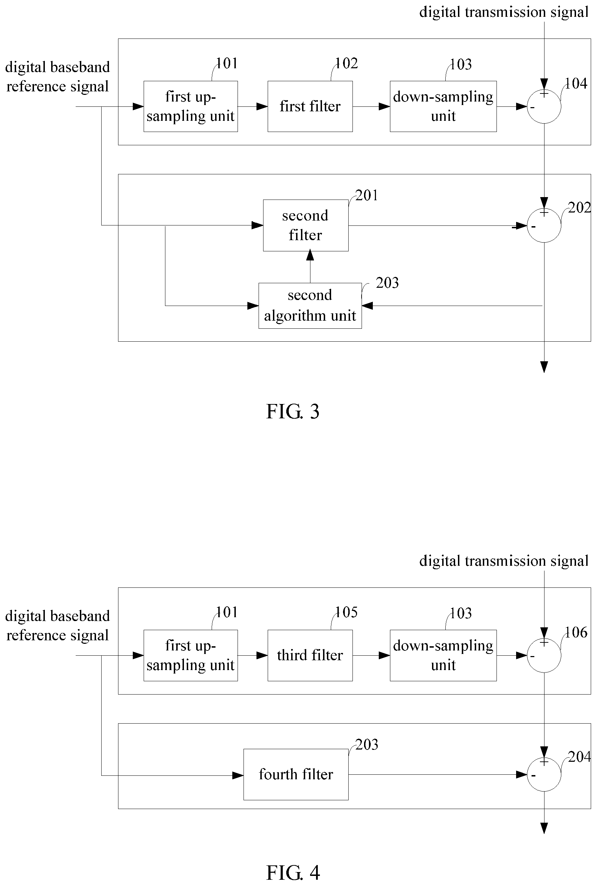

Referring to FIG. 3, which is a structure diagram of a digital interference cancellation apparatus described in embodiment two of the present invention. A difference between the digital interference cancellation apparatus in the embodiment two as shown in FIG. 3 and that in the embodiment one as shown in FIG. 2 lies in that, the first interference cancellation module 10 further includes a second up-sampling unit 105 and a first algorithm unit 106.

Specifically, an input end of the second up-sampling unit 105 is connected to a first input end of the digital interference cancellation apparatus 12a, and an output end of the second up-sampling unit 105 is connected to a first input end of the first algorithm unit 106.

A second input end of the first algorithm unit 106 is connected to an output end of the first up-sampling unit 105, and an output end of the first algorithm unit 106 is connected to a coefficient input end of the first filter 102.

The second up-sampling unit 105 is configured to receive the digital receiving signal, up-sample the digital receiving signal, and output a first receiving signal to the first algorithm unit 106, wherein a sampling rate of the second up-sampling unit 105 is equal to the sampling rate of the first up-sampling unit 101.

The first algorithm unit 106 is configured to estimate the first filtering coefficient according to the first reference signal and the first receiving signal by using an adaptive filtering algorithm, and send the first filtering coefficient to the first coefficient obtaining unit of the first filter 102.

The adaptive filtering algorithm may be specifically RLS (Recursive Least Squares, recursive least squares). The estimating, by the first algorithm unit 106, the first filtering coefficient by adopting the adaptive filtering algorithm may include: squaring a difference value between the first receiving signal and the first reference signal by taking the first receiving signal as an expected value, and minimizing the obtained square value to obtain the first filtering coefficient.

It should be illustrated that, in the process of estimating the first filtering coefficient by using the adaptive filtering algorithm, it is required that a sampling rate of the first receiving signal is equal to a sampling rate of the first reference signal. Therefore, up-sampling needs to be performed on the digital receiving signal by the second up-sampling unit 70, and a sampling rate of the second up-sampling unit 70 is equal to the sampling rate of the first up-sampling unit 10.

The digital interference cancellation apparatus in the embodiment of the present invention is illustrated above in detail, which uses the first filter 102 to reconstruct the multipath propagated self-interference signal(s) in the near field and may cancel most of self-interference signals. However, self-interference signal(s) reflected by the far field are still present in the system. Therefore, the apparatus in the embodiment of the present invention further includes a second filter 201, and by reconstructing far field self-interference signal(s) by the second filter 201, cancellation of residual self-interference signals maybe achieved.

Specifically, a propagation path of a self-interference signal reflected by the far field is generally within a range of dozens of meters to several hundreds of meters (a delay is generally 30ns to 1us). Since a far field self-interference signal has relatively long propagation path and may be reflected by scatterer(s) for multiple times, a power of the far field self-interference signal when arriving at the transceiver will be much lower than that of a near field self-interference signal (for example, a power difference is generally larger than 30dB). Therefore, on the basis of adopting the first filter 102 to achieve the first stage of interference cancellation (in which the near field self-interference signal is effectively eliminated), the residual self-interference signals reflected by the far field may be reconstructed by using a filter with a relative low rate.

For example, the sampling rate of the second filter 201 may be set as 100Msps with a corresponding sampling period of 10ns, and 80∼100 (800ns/10ns∼1us/10ns) taps are set to correspond to a propagation delay of 800ns ∼ 1us.

Specifically, the reconstructing, by the second filter 201, the far field self-interference signal by using the digital baseband reference signal may include: the second filter 201 generates, by taking a sampling period of the digital baseband reference signal as a delay unit of a tap, an impulse response of a far field self-interference channel, and filters the digital baseband reference signal by using the impulse response to reconstruct the far field self-interference signal.

The second filter 201 may include a second receiving unit, a second coefficient obtaining unit, a second filtering unit and a second sending unit.

The second receiving unit is configured to receive the digital baseband reference signal and send the digital baseband reference signal to the second filtering unit.

The second coefficient obtaining unit is configured to obtain a second filtering coefficient and send the second filtering coefficient to the second filtering unit.

The second filtering unit is configured to filter, in combination with the second filtering coefficient by taking a sampling period of the digital baseband reference signal as a delay step of a tap delay line, the digital baseband reference signal to reconstruct the second self-interference signal.

The second sending unit is configured to send the second self-interference signal to the second subtractor.

Similarly, a filtering coefficient of the second filter 201 may be preset according to actual demand, or may be estimated by using a certain algorithm.

In this case, considering that a change of propagation environment in the far field of a transceiving antenna is relatively large (for example, it is relatively greatly influenced by a moving object), changes of an amplitude and a delay of a self-interference signal reflected through the far field with time are relatively fast, the adaptive filtering algorithm may be unable to track a change of a coefficient of a filter. Therefore, for the second filter 201, channel estimation may be used to obtain the second filtering coefficient.

Still in combination with FIG. 3, the second interference cancellation module 20 may further include a second algorithm unit 203.

A first input end of the second algorithm unit 203 is connected to the first input end of the digital interference cancellation apparatus 12a, a second input end of the second algorithm unit 203 is connected to the output end of the second subtractor 202, and an output end of the second algorithm unit 203 is connected to a coefficient input end of the second filter 201.

The second algorithm unit 203 is configured to estimate the second filtering coefficient through channel estimation according to the digital receiving signal after the second stage of interference cancellation output by the second subtractor 202 and the digital baseband reference signal, and send the second filtering coefficient to the second filter 201.

According to a feature that changes of an amplitude and a delay of a near field self-interference signal with time are relatively small and slow, the adaptive filtering algorithm is adopted by the digital interference cancellation apparatus 12a in the embodiment two of the present invention to estimate the first filtering coefficient, which achieves reconstruction of the near field self-interference and eliminates the near field self-interference in the digital receiving signal; and meanwhile, according to a feature that changes of the amplitude and delay of the self-interference signal reflected by the far field are relatively fast, channel estimation is used by the digital interference cancellation apparatus 12a to obtain the second filtering coefficient, which achieves reconstruction of the far field self-interference and eliminates the far field self-interference in the digital receiving signal.

Therefore, the near field self-interference and the far field self-interference in the digital receiving signal can be effectively eliminated, a good self-interference cancellation effect is obtained, correct reception of a useful signal is guaranteed, and working performance of the transceiver of the wireless full duplex system is improved.

In the digital interference cancellation apparatus in the embodiment one of the present invention, a subtractor is configured to cancel the interference signals. In a practical application, a structure with an adder may also be adopted, and in this case, it just need to correspondingly set the filtering coefficient of the filter to reconstruct a negative near field interference signal or a negative far field interference signal. Specifically, reference is made to the digital interference cancellation apparatus in the embodiment two of the present invention as shown in FIG. 3.

Referring to FIG. 4, which is a structure diagram of a digital interference cancellation apparatus in embodiment three of the present invention. As shown in FIG. 4,

the first interference cancellation module 10 may include a first up-sampling unit 101, a third filter 105, a down-sampling unit 103 and a first adder 106.

A first input end of the first adder 106 is connected to a first input end of the digital interference cancellation apparatus 12a.

An input end of the first up-sampling unit 101 is connected to a second input end of the digital interference cancellation apparatus 12a, and an output end of the first up-sampling unit 101 is connected to the input end of the third filter 105.

An output end of the third filter 105 is connected to an input end of the down-sampling unit 103, an output end of the down-sampling unit 103 is connected to a second input end of the first adder 106, and an output end of the first adder 106 is served as an output end of the first interference cancellation module.

The first up-sampling unit 101 is configured to receive a digital transmission signal output by the digital transmission signal processor 1a as a digital baseband reference signal, up-sample the digital baseband reference signal, and output a first reference signal to the third filter 105, wherein a sampling rate of the first up-sampling unit 101 is larger than an original sampling rate of the digital transmission signal, namely a sampling rate of the ADC 9a.

The third filter 105 is configured to receive the first reference signal, reconstruct a fourth self-interference signal, and send the fourth self-interference signal to the down-sampling unit 103.

The down-sampling unit 103 is configured to down-sample the fourth self-interference signal to obtain a negative first self-interference signal, and send the negative first self-interference signal to the first adder 106, wherein a sampling rate of the down-sampling unit 103 and the sampling rate of the first up-sampling unit 101 are reciprocals of each other.

The first adder 106 is configured to receive a digital receiving signal output by the ADC 9a, add the digital receiving signal with the negative first self-interference signal to obtain a digital receiving signal after a first stage of interference cancellation, and send the digital receiving signal after the first stage of interference cancellation to the second interference cancellation module 20.

It should be illustrated that the first interference cancellation module may be used for achieving elimination of a near field self-interference signal. In this case, the third filter 105 is generally a high-speed filter, and is used for filtering the up-sampled digital baseband reference signal (i.e., the first reference signal) to reconstruct the fourth self-interference signal, and then down-sampling the fourth self-interference signal to obtain the negative first self-interference signal (i.e., a near field self-interference signal which is negative).

In the embodiment three of the present invention, by setting a filtering coefficient of the third filter 105, the negative first self-interference signal may be reconstructed, and the digital receiving signal is then added with the negative first self-interference signal to obtain the digital receiving signal after the first stage of interference cancellation, which achieves cancellation of the near field self-interference signal.

The second interference cancellation module 20 may include a fourth filter 203 and a second adder 204.

An input end of the fourth filter 203 is connected to the second input end of the digital interference cancellation apparatus 12a, and an output end of the fourth filter 203 is connected to a first input end of the second adder 204.

A second input end of the second adder 204 is connected to the output end of the first interference cancellation module 10 (i.e., the output end of the first adder 106), and an output end of the second adder 204 is connected to the output end of the digital interference cancellation apparatus 12a.

The fourth filter 203 is configured to reconstruct a negative second self-interference signal by using the digital baseband reference signal, and send the negative second self-interference signal to the second adder 204.

The second adder 204 is configured to add the digital receiving signal after the first stage of interference cancellation with the negative second self-interference signal to obtain a digital receiving signal after a second stage of interference cancellation, and send the digital receiving signal after the second stage of interference cancellation to the digital receiving signal processor 10a.

It should be illustrated that the second interference cancellation module may be configured to achieving elimination of a far field self-interference signal, and in this case, the fourth filter 203 is generally a low-speed filter and is used for directly filtering the digital baseband reference signal to reconstruct the negative second self-interference signal (i.e., a far field self-interference signal which is negative).

In the embodiment three of the present invention, by setting a filtering coefficient of the fourth filter 203, the negative second self-interference signal may be reconstructed, and the digital receiving signal is then added with the negative second self-interference signal to obtain the digital receiving signal after the second stage of interference cancellation, which achieves cancellation of the far field self-interference signal.

After the digital interference cancellation apparatus 12a in the embodiment of the present invention up-samples the digital baseband reference signal, the digital interference cancellation apparatus 12a reconstructs a negative near field self-interference signal through the third filter 105, subtracts the reconstructed negative near field self-interference signal from the digital receiving signal after down-sampling the reconstructed negative near field self-interference signal, which achieves the first stage of interference cancellation for the digital receiving signal, and eliminates the near field self-interference in the digital receiving signal; and then, the digital interference cancellation apparatus 12a reconstructs the far field self-interference signal by using the digital baseband reference signal through the fourth filter 203, and subtracts the reconstructed far field self-interference signal from the digital receiving signal after the first stage of interference cancellation, which achieves the second stage of interference cancellation for the digital receiving signal, and eliminates the far field self-interference in the digital receiving signal.

Therefore, the digital interference cancellation apparatus 12a in the embodiment three of the present invention respectively reconstructs the near field self-interference signal and the far field self-interference signal through two-stage interference cancellation modules, which can effectively eliminate the near field self-interference and the far field self-interference in the digital receiving signal to obtain a good self-interference cancellation effect, guarantee correct reception of a useful signal, and improve working performance of the transceiver of the wireless full duplex system.

It should to be noted that, in the embodiment three of the present invention, a working principle and a specific structure of the third filter 105 may be the same as those of the first filter 102 in the embodiment one, and a difference lies only in setting of the filtering coefficient. By setting a specific value of the filtering coefficient, the third filter 105 reconstructs the negative first self-interference signal.

Similarly, in the embodiment three of the present invention, a working principle and a specific structure of the fourth filter 203 may be the same as those of the second filter 201 in the embodiment one, and a difference lies only in setting of the filtering coefficient. By setting a specific value of the filtering coefficient, the fourth filter 203 reconstructs the negative second self-interference signal.

Corresponding to the digital interference cancellation apparatus provided by the embodiments of the present invention, an embodiment of the present invention further provides a transceiver of a wireless full duplex system. The transceiver may include a transmission channel and a receiving channel.

The transmission channel includes a digital transmission signal processor, a digital to analog converter DAC, an uplink frequency converter, a power amplifier and a transmitting antenna, which are sequentially connected.

The receiving channel includes a receiving antenna, an low noise amplifier LNA, a downlink frequency converter, an analog to digital converter ADC, and a digital receiving signal processor, which are sequentially connected.

The transceiver further includes the digital interference cancellation apparatus in any one of aforementioned embodiments.

In addition, an embodiment of the present invention further provides a wireless full duplex system, and the system includes the transceiver in the aforementioned embodiment.

An embodiment of the present invention further provides a digital interference cancellation method of a transceiver of a wireless full duplex system. The method is applicable to the transceiver of the wireless full duplex system and is used for effectively eliminating a self-interference signal in a digital receiving signal of the wireless full duplex system in a complex communication environment.

The transceiver includes a transmission channel and a receiving channel. The transmission channel includes a digital transmission signal processor, a digital to analog converter DAC, an uplink frequency converter, a power amplifier and a transmitting antenna, which are sequentially connected; and the receiving channel includes a receiving antenna, an low noise amplifier LNA, a downlink frequency converter, an analog to digital converter ADC and a digital receiving signal processor, which are sequentially connected.

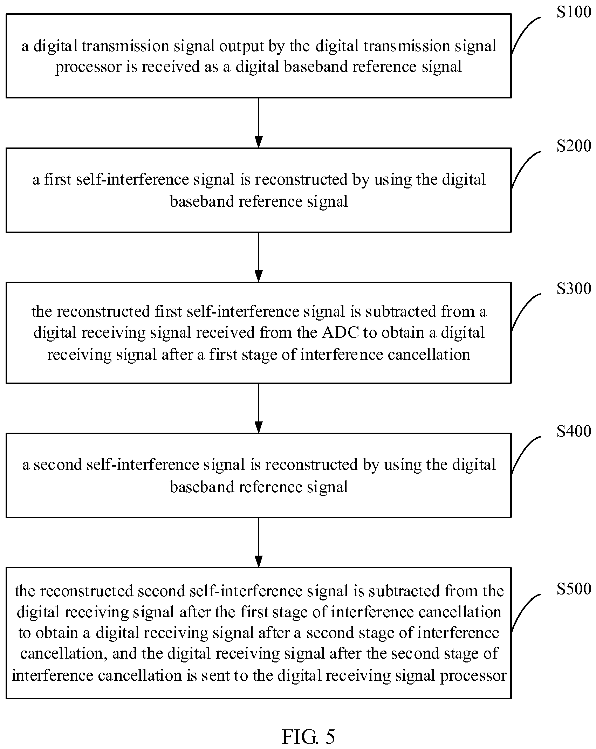

Referring to FIG. 5, which is a flowchart of a digital interference cancellation method of a transceiver of a wireless full duplex system in an embodiment of the present invention. As shown in FIG. 5, the method may include the following steps.

S100: a digital transmission signal output by the digital transmission signal processor is received as a digital baseband reference signal.

S200: a first self-interference signal is reconstructed by using the digital baseband reference signal.

S300: the reconstructed first self-interference signal is subtracted from a digital receiving signal received from the ADC to obtain a digital receiving signal after a first stage of interference cancellation.

S400: a second self-interference signal is reconstructed by using the digital baseband reference signal.

S500: the reconstructed second self-interference signal is subtracted from the digital receiving signal after the first stage of interference cancellation to obtain a digital receiving signal after a second stage of interference cancellation, and the digital receiving signal after the second stage of interference cancellation is sent to the digital receiving signal processor.

The method in the embodiment of the present invention adopts a two-stage self-interference signal reconstruction solution, in which the first self-interference signal is first reconstructed by using the digital baseband reference signal, and the reconstructed first self-interference signal is subtracted from the digital receiving signal, which achieves the first stage of interference cancellation for the digital receiving signal, and eliminates near field self-interference in the digital receiving signal; and then, the second self-interference signal is reconstructed by using the digital baseband reference signal, and the reconstructed second self-interference signal is subtracted from the digital receiving signal after the first stage of interference cancellation, which achieves the second stage of interference cancellation for the digital receiving signal, and eliminates far field self-interference in the digital receiving signal.

Therefore, the near field self-interference signal and the far field self-interference signal are respectively reconstructed through two-stage interference cancellation modules, which can effectively eliminate the near field self-interference and the far field self-interference in the digital receiving signal to obtain a good self-interference cancellation effect, guarantee correct reception of a useful signal, and improve working performance of the transceiver of the wireless full duplex system.

Preferably, the reconstructing the near field self-interference signal by using the digital baseband reference signal in S200 may include the following steps.

S201: the digital baseband reference signal is up-sampled to obtain a first reference signal, wherein a sampling rate of up-sampling is larger than a sampling rate of the ADC.

S202: a third self-interference signal is reconstructed by using the first reference signal.

S203: the third self-interference signal is down-sampled to obtain the first self-interference signal, wherein a sampling rate of down-sampling and a sampling rate of up-sampling of the digital baseband reference signal are reciprocals of each other.

The reconstructing the third self-interference signal by using the first reference signal in S202 may include the following steps.

S2021: a first filtering coefficient is obtained.

S2022: by taking a sampling period of a high-speed reference signal as a delay step of a tap delay line, the first reference signal is filtered in combination with the first filtering coefficient to reconstruct the third self-interference signal, wherein a sampling period of the first reference signal is equal to a reciprocal of a sampling rate of up-sampling performed on the digital baseband reference signal.

Since a change of propagation environment in the near field for a transceiving antenna is relatively small, changes of amplitude and a delay of a near field self-interference signal with time are relatively small and slow, the first filtering coefficient may be estimated by using an adaptive filtering algorithm, and reconstruction of the near field self-interference is achieved.

Specifically, the obtaining the first filtering coefficient includes: up-sampling the digital receiving signal to obtain a first receiving signal, wherein a sampling rate of up-sampling of the digital receiving signal is equal to a sampling rate of up-sampling of the digital baseband reference signal; and estimating the first filtering coefficient according to the first reference signal and the first receiving signal by adopting the adaptive filtering algorithm.

The estimating the first filtering coefficient by adopting the adaptive filtering algorithm may include: squaring a difference value between the first receiving signal and the first reference signal by taking the first receiving signal as an expected value, and minimizing the obtained square value to obtain the first filtering coefficient.

Preferably, the reconstructing the second self-interference signal by using the digital baseband reference signal in S400 may include the following steps.

S401: a second filtering coefficient is obtained.

S402: by taking a sampling period of the digital baseband reference signal as a delay step of a tap delay line, the digital baseband reference signal is filtered in combination with the second filtering coefficient to reconstruct the second self-interference signal.

Considering that a change of propagation environment in the far field of a transceiving antenna is relatively large, changes of an amplitude and a delay of a self-interference signal reflected through the far field with time are relatively fast, the adaptive filtering algorithm may be unable to track a change of a coefficient of a filter. Therefore, the second filtering coefficient may be obtained by using channel estimation.

Specifically, the obtaining the second filtering coefficient may include: estimating the second filtering coefficient through channel estimation according to the digital receiving signal after the second stage of interference cancellation and to the digital baseband reference signal.

In the method of the embodiment of the present invention, according to a feature that changes of an amplitude and a delay of a near field self-interference signal with time are relatively small and slow, the adaptive filtering algorithm is used for estimating the first filtering coefficient, which achieves reconstruction of the near field self-interference and eliminates the near field self-interference in the digital receiving signal; and meanwhile, according to a feature that changes of the amplitude and delay of the self-interference signal reflected through the far field are relatively fast, channel estimation is used for obtaining the second filtering coefficient, which achieves reconstruction of the far field self-interference and eliminates the far field self-interference in the digital receiving signal.

Therefore, the near field self-interference and the far field self-interference in the digital receiving signal can be effectively eliminated, a good self-interference cancellation effect is obtained, correct reception of a useful signal is guaranteed, and working performance of the transceiver of the wireless full duplex system is improved.

Those of ordinary skill in the art may be aware that, units and algorithm steps of the respective examples described in the embodiments disclosed in the present disclosure may be implemented with electronic hardware or with a combination of computer software and an electronic hardware. Whether these functions are implemented in a form of hardware or software is determined by specific applications and design constraint conditions of the technical solutions. Those skilled may implement the described functions by using different methods for each specific application, but this implementation should not be considered beyond the scope of the present invention.

Those skilled in the art to which the present invention pertains may clearly understand that, for convenience and simplicity of description, specific working processes of the system, the apparatus and the units described above may refer to corresponding processes in the foregoing method embodiments, and will not be repeated redundantly herein.

In several embodiments provided by the present application, it should be understood that, the disclosed system, apparatus and method may be implemented in other manners. For example, the apparatus embodiments described above are merely exemplary, e.g., division of the units is merely a logic function division, and other division manners may be present in a practical implementation. For example, a plurality of units or components may be combined or integrated to another system, or some features may be omitted or not implemented. From another point of view, the displayed or discussed mutual coupling or direct coupling or communication connection may be indirect coupling or communication connection via some interfaces, apparatuses or units, and may be in electrical, mechanical or other forms.

The units described as separate components may be or may not be separated physically. Components displayed as units may be or may not be physical units, namely, may be located in one place, or may be distributed on a plurality of network units. A part of or all of the units may be selected according to actual demand to implement the purposes of the technical solutions in the embodiments.

In addition, the respective functional units in the respective embodiments of the present invention may be integrated in one processing unit, or the respective units singly exist physically, or two or more units are integrated in one unit.

If the function is implemented in the form of a software functional unit and is sold or used as an independent product, it may be stored in a computer readable storage medium. Based on this understanding, the technical solutions of the present invention substantially, or the part contributing to the prior art, or a part of the technical solutions may be implemented in the form of a software product. The computer software product is stored in a storage medium, and includes a plurality of instructions enabling a computer device (may be a personnel computer, a server, or a network device or the like) or a processor (processor) to execute all or a part of the steps of the methods in the respective embodiments of the present invention. The foregoing storage medium includes a variety of media capable of storing program codes, such as a USB disk, a mobile hard disk, a read-only memory (ROM), a random access memory (RAM), a magnetic disk, an optical disk or the like.

The foregoing descriptions are merely specific embodiments of the present invention, rather than limiting the protection scope of the present invention. Any skilled one who is familiar with this art could readily think of variations or substitutions within the disclosed technical scope of the present invention, and these variations or substitutions shall fall within the protection scope of the present invention. Accordingly, the protection scope of the claims should prevail over the protection scope of the present invention.

## Claims

1. A digital interference cancellation apparatus, wherein the apparatus is applied to a transceiver of a wireless full duplex system; and
wherein the digital interference cancellation apparatus comprises: a first interference cancellation module (101, 102, 103, 104) and a second interference cancellation module (201, 202);
the first interference cancellation module is configured to receive a digital transmission signal output by the transceiver as a digital baseband reference signal, reconstruct a first self-interference signal by up-sampling, filtering and then down-sampling the digital baseband reference signal, subtract the first self-interference signal from a digital receiving signal received from the transceiver to obtain a digital receiving signal after a first stage of interference cancellation, and send the digital receiving signal after the first stage of interference cancellation to the second interference cancellation module; and
the second interference cancellation module is configured to receive the digital transmission signal output by the transceiver as the digital baseband reference signal, reconstruct a second self-interference signal by filtering the digital baseband reference signal, subtract the second self-interference signal from the digital receiving signal after the first stage of interference cancellation to obtain a digital receiving signal after a second stage of interference cancellation, and send the digital receiving signal after the second stage of interference cancellation to the transceiver;
wherein the first self-interference signal is a near field self-interference signal, and the second self-interference signal is a far field self-interference signal.

2. The digital interference cancellation apparatus of claim 1, wherein the first interference cancellation module comprises a first up-sampling unit (101), a first filter (102), a down-sampling unit (103) and a first subtractor (104);
a positive input end of the first subtractor (104) is connected to a first input end of the digital interference cancellation apparatus;
an input end of the first up-sampling unit (101) is connected to a second input end of the digital interference cancellation apparatus, and an output end of the first up-sampling unit (101) is connected to an input end of the first filter (102);
an output end of the first filter (102) is connected to an input end of the down-sampling unit (103), an output end of the down-sampling unit (103) is connected to a negative input end of the first subtractor (104), and an output end of the first subtractor (104) is used as an output end of the first interference cancellation module;
the first up-sampling unit (101) is configured to receive the digital transmission signal as the digital baseband reference signal, up-sample the digital baseband reference signal, and output a first reference signal to the first filter, wherein a sampling rate of the first up-sampling unit is larger than a sampling rate of the digital transmission signal;
the first filter (102) is configured to receive the first reference signal, reconstruct a third self-interference signal, and send the third self-interference signal to the down-sampling unit (103);
the down-sampling unit (103) is configured to down-sample the third self-interference signal to obtain a first self-interference signal, and send the first self-interference signal to the first subtractor (104), wherein a sampling rate of the down-sampling unit (103) and the sampling rate of the first up-sampling unit (101) are reciprocals of each other; and
the first subtractor (104) is configured to receive the digital receiving signal, subtract the first self-interference signal from the digital receiving signal to obtain a digital receiving signal after a first stage of interference cancellation, and send the digital receiving signal after the first stage of interference cancellation to the second interference cancellation module.

3. The digital interference cancellation apparatus of claim 2, wherein the first filter (102) comprises:
a first receiving unit, configured to receive the first reference signal, and send the first reference signal to a first filtering unit;
a first coefficient obtaining unit, configured to obtain a first filtering coefficient, and send the first filtering coefficient to the first filtering unit;
the first filtering unit, configured to filter, in combination with the first filtering coefficient by taking the sampling period of the first reference signal as a delay step of a tap delay line, the first reference signal to reconstruct the third self-interference signal, wherein a sampling period of the first reference signal is equal to a reciprocal of a sampling rate of the first up-sampling unit; and
a first sending unit, configured to send the third self-interference signal to the down-sampling unit.

4. The digital interference cancellation apparatus of claim 3, wherein the first interference cancellation module further comprises a second up-sampling unit and a first algorithm unit;
an input end of the second up-sampling unit is connected to the first input end of the digital interference cancellation apparatus, and an output end of the second up-sampling unit is connected to a first input end of the first algorithm unit;
a second input end of the first algorithm unit is connected to the output end of the first up-sampling unit (101), and an output end of the first algorithm unit is connected to a coefficient input end of the first filter (102);
the second up-sampling unit is configured to receive the digital receiving signal, up-sample the digital receiving signal, and output a first receiving signal to the first algorithm unit, wherein a sampling rate of the second up-sampling unit is equal to the sampling rate of the first up-sampling unit (101); and
the first algorithm unit is configured to estimate the first filtering coefficient according to the first reference signal and the first receiving signal by adopting an adaptive filtering algorithm, and send the first filtering coefficient to the first coefficient obtaining unit of the first filter (102).

5. The digital interference cancellation apparatus of claim 4, wherein the estimating, by the first algorithm unit, the first filtering coefficient by adopting an adaptive filtering algorithm, comprises:
squaring a difference value between the first receiving signal and the first reference signal by taking the first receiving signal as an expected value, and minimizing the obtained square value to obtain the first filtering coefficient.

6. The digital interference cancellation apparatus of claim 1, wherein the first interference cancellation module comprises a first up-sampling unit, a third filter, a down-sampling unit and a first adder;
a first input end of the first adder is connected to a first input end of the digital interference cancellation apparatus;
an input end of the first up-sampling unit is connected to a second input end of the digital interference cancellation apparatus, and an output end of the first up-sampling unit is connected to an input end of the third filter;
an output end of the third filter is connected to an input end of the down-sampling unit, an output end of the down-sampling unit is connected to a second input end of the first adder, and an output end of the first adder is served as an output end of the first interference cancellation module;
the first up-sampling unit is configured to receive a digital transmission signal as a digital baseband reference signal, up-sample the digital baseband reference signal, and output a first reference signal to the third filter, wherein a sampling rate of the first up-sampling unit is larger than a sampling rate of the digital transmission signal;
the third filter is configured to receive the first reference signal, reconstruct a fourth self-interference signal, and send the fourth self-interference signal to the down-sampling unit;
the down-sampling unit is configured to down-sample the fourth self-interference signal to obtain a negative first self-interference signal, and send the negative first self-interference signal to the first adder, wherein a sampling rate of the down-sampling unit and the sampling rate of the first up-sampling unit are reciprocals of each other; and
the first adder is configured to receive the digital receiving signal, add the digital receiving signal with the negative first self-interference signal to obtain a digital receiving signal after a first stage of interference cancellation, and send the digital receiving signal after the first stage of interference cancellation to the second interference cancellation module.

7. The digital interference cancellation apparatus of any of claims 1 to 6, wherein the second interference cancellation module comprises a second filter (201) and a second subtractor (202);
an input end of the second filter (201) is connected to the second input end of the digital interference cancellation apparatus, and an output end of the second filter (201) is connected to a negative input end of the second subtractor (202);
a positive input end of the second subtractor (202) is connected to the output end of the first interference cancellation module, and an output end of the second subtractor (202) is connected to an output end of the digital interference cancellation apparatus;
the second filter (201) is configured to reconstruct a second self-interference signal by using the digital baseband reference signal, and send the second self-interference signal to the second subtractor (202); and
the second subtractor (202) is configured to subtract the second self-interference signal from the digital receiving signal after the first stage of interference cancellation to obtain a digital receiving signal after a second stage of interference cancellation, and send the digital receiving signal after the second stage of interference cancellation to the digital receiving signal processor.

8. The digital interference cancellation apparatus of claim 7, wherein the second filter (201) comprises:
a second receiving unit, configured to receive the digital baseband reference signal, and send the digital baseband reference signal to a second filtering unit;
a second coefficient obtaining unit, configured to obtain a second filtering coefficient, and send the second filtering coefficient to the second filtering unit;
the second filtering unit, configured to filter, in combination with the second filtering coefficient by taking a sampling period of the digital baseband reference signal as a delay step of a tap delay line, the digital baseband reference signal to reconstruct the second self-interference signal; and
a second sending unit, configured to send the second self-interference signal to the second subtractor.

9. The digital interference cancellation apparatus of claim 8, wherein the second interference cancellation module further comprises a second algorithm unit (203);
a first input end of the second algorithm unit (203) is connected to the first input end of the digital interference cancellation apparatus, a second input end of the second algorithm unit (203) is connected to the output end of the second subtractor (202), and an output end of the second algorithm unit (203) is connected to a coefficient input end of the second filter (201); and
the second algorithm unit (203) is configured to estimate the second filtering coefficient through channel estimation according to the digital receiving signal after the second stage of interference cancellation output by the second subtractor (202) as well as the digital baseband reference signal by channel estimation, and send the second filtering coefficient to the second coefficient obtaining unit of the second filter (201).

10. The digital interference cancellation apparatus of any of claims 1 to 6, wherein the second interference cancellation module comprises a fourth filter and a second adder;
an input end of the fourth filter is connected to the second input end of the digital interference cancellation apparatus, and an output end of the fourth filter is connected to a first input end of the second adder;
a second input end of the second adder is connected to the output end of the first interference cancellation module, and an output end of the second adder is connected to the output end of the digital interference cancellation apparatus;
the fourth filter is configured to reconstruct a negative second self-interference signal by using the digital baseband reference signal, and send the negative second self-interference signal to the second adder; and
the second adder is configured to add the digital receiving signal after the first stage of interference cancellation with the negative second self-interference signal to obtain a digital receiving signal after a second stage of interference cancellation, and send the digital receiving signal after the second stage of interference cancellation to the digital receiving signal processor.

11. A digital interference cancellation method for a transceiver of a wireless full duplex system, comprising:
receiving (S100) a digital transmission signal output by the transceiver as a digital baseband reference signal;
reconstructing (S200) a first self-interference signal by up-sampling, filtering and then down-converting the digital baseband reference signal;
subtracting (S300) the first self-interference signal from a digital receiving signal received from the transceiver to obtain a digital receiving signal after a first stage of interference cancellation;
reconstructing (S400) a second self-interference signal by filtering the digital baseband reference signal; and
subtracting (S500) the second self-interference signal from the digital receiving signal after the first stage of interference cancellation to obtain a digital receiving signal after a second stage of interference cancellation, and sending the digital receiving signal after the second stage of interference cancellation to the transceiver;
wherein the first self-interference signal is a near field self-interference signal, and the second self-interference signal is a far field self-interference signal.

12. The method of claim 11, wherein the reconstructing (S200) a first self-interference signal by using the digital baseband reference signal comprises:
up-sampling the digital baseband reference signal to obtain a first reference signal, wherein a sampling rate of up-sampling is larger than a sampling rate of the digital transmission signal;
reconstructing a third self-interference signal by using the first reference signal; and
down-sampling the third self-interference signal to obtain the first self-interference signal, wherein a sampling rate of down-sampling and the sampling rate of up-sampling of the digital baseband reference signal are reciprocals of each other.

13. The method of claim 12, wherein the reconstructing a third self-interference signal by using the first reference signal, comprises:
obtaining a first filtering coefficient; and
filtering, in combination with the first filtering coefficient by taking a sampling period of the high-speed reference signal as a delay step of a tap delay line, the first reference signal to reconstruct the third self-interference signal;
wherein a sampling period of the first reference signal is equal to a reciprocal of the sampling rate of up-sampling of the digital baseband reference signal.

14. The method of claim 12, wherein the obtaining a first filtering coefficient comprises:
up-sampling the digital receiving signal to obtain a first receiving signal, wherein a sampling rate of up-sampling of the digital receiving signal is equal to a sampling rate of up-sampling performed on the digital baseband reference signal; and
estimating the first filtering coefficient according to the first reference signal and the first receiving signal by adopting an adaptive filtering algorithm.

15. The method of claim 14, wherein the estimating the first filtering coefficient by adopting an adaptive filtering algorithm comprises:
squaring a difference value between the first receiving signal and the first reference signal by taking the first receiving signal as an expected value, and minimizing the obtained square value to obtain the first filtering coefficient.

16. The method of any of claims 11 to 15, wherein the reconstructing (S400) a second self-interference signal by using the digital baseband reference signal comprises:
obtaining a second filtering coefficient; and
filtering, in combination with the second filtering coefficient by taking a sampling period of the digital baseband reference signal as a delay step of the tap delay line, the digital baseband reference signal to reconstruct the second self-interference signal.

17. The method of claim 16, wherein the obtaining a second filtering coefficient comprises:
estimating the second filtering coefficient through channel estimation according to the digital receiving signal after the second stage of interference cancellation as well as the digital baseband reference signal.

18. A transceiver of a wireless full duplex system, wherein the transceiver comprises the digital interference cancellation apparatus of any of claims 1 to 10.

19. A wireless full duplex system, comprising the transceiver of claim 18.

## Patentansprüche

1. Digitale Interferenzunterdrückungsvorrichtung, wobei die Vorrichtung auf einen Sender-Empfänger eines drahtlosen Vollduplexsystems angewendet wird; und wobei die digitale Interferenzunterdrückungsvorrichtung umfasst: ein erstes Interferenzunterdrückungsmodul (101, 102, 103, 104) und ein zweites Interferenzunterdrückungsmodul (201, 202);
wobei das erste Interferenzunterdrückungsmodul konfiguriert ist, um ein digitales Übertragungssignal zu empfangen, das von dem Sender-Empfänger als ein digitales Basisbandreferenzsignal ausgegeben wird, ein erstes Selbststörungssignal durch Aufwärtsabtasten, Filtern und anschließendes Abwärtsabtasten des digitalen Basisbandreferenzsignals zu rekonstruieren, das erste Selbststörungssignal von einem digitalen Empfangssignal zu subtrahieren, das von dem Sender-Empfänger empfangen wird, um ein digitales Empfangssignal nach einer ersten Stufe der Interferenzunterdrückung zu erhalten und das digitale Empfangssignal nach der ersten Stufe der Interferenzunterdrückung an das zweite Interferenzunterdrückungsmodul zu senden; und
das zweite Interferenzunterdrückungsmodul konfiguriert ist, um das digitale Übertragungssignal, das von dem Sender-Empfänger als digitales Basisbandreferenzsignal ausgegeben wird, zu empfangen, ein zweites Selbststörungssignal durch Filtern des digitalen Basisbandreferenzsignals zu rekonstruieren, das zweite Selbststörungssignal von dem digitalen Empfangssignal nach der ersten Stufe der Interferenzunterdrückung zu subtrahieren, um ein digitales Empfangssignal nach einer zweiten Stufe der Interferenzunterdrückung zu erhalten, und das digitale Empfangssignal nach der zweiten Stufe der Interferenzunterdrückung an den Sender-Empfänger zu senden;
wobei das erste Selbststörungssignal ein Nahfeld-Selbststörungssignal ist und das zweite Selbststörungssignal ein Fernfeld-Selbststörungssignal ist.

2. Digitale Interferenzunterdrückungsvorrichtung nach Anspruch 1, wobei das erste Interferenzunterdrückungsmodul eine erste Aufwärtsabtasteinheit (101), einen ersten Filter (102), eine Abwärtsabtasteinheit (103) und eine erste Subtrahiereinrichtung (104) umfasst;
ein positives Eingangsende der ersten Subtrahiereinrichtung (104) mit einem ersten Eingangsende der digitalen Interferenzunterdrückungsvorrichtung verbunden ist; ein Eingangsende der ersten Aufwärtsabtasteinheit (101) mit einem zweiten Eingangsende der digitalen Interferenzunterdrückungsvorrichtung verbunden ist und ein Ausgangsende der ersten Aufwärtsabtasteinheit (101) mit einem Eingangsende des ersten Filters (102) verbunden ist;
ein Ausgangsende des ersten Filters (102) mit einem Eingangsende der Abwärtsabtasteinheit (103) verbunden ist, ein Ausgangsende der Abwärtsabtasteinheit (103) mit einem negativen Eingangsende der ersten Subtrahiereinrichtung (104) verbunden ist und ein Ausgangsende der ersten Subtrahiereinrichtung (104) als ein Ausgangsende des ersten Interferenzunterdrückungsmoduls verwendet wird;
die erste Aufwärtsabtasteinheit (101) konfiguriert ist, um das digitale Übertragungssignal als das digitale Basisbandreferenzsignal zu empfangen, das digitale Basisbandreferenzsignal aufwärts abzutasten und ein erstes Referenzsignal an den ersten Filter auszugeben, wobei eine Abtastrate der ersten Aufwärtsabtasteinheit größer als eine Abtastrate des digitalen Übertragungssignals ist;
der erste Filter (102) konfiguriert ist, um das erste Referenzsignal zu empfangen, ein drittes Selbststörungssignal zu rekonstruieren und das dritte Selbststörungssignal an die Abwärtsabtasteinheit (103) zu senden;
die Abwärtsabtasteinheit (103) konfiguriert ist, um das dritte Selbststörungssignal abwärts abzutasten, um ein erstes Selbststörungssignal zu erhalten und das erste Selbststörungssignal an die erste Subtrahiereinrichtung (104) zu senden, wobei eine Abtastrate der Abwärtsabtasteinheit (103) und die Abtastrate der ersten Aufwärtsabtasteinheit (101) Kehrwerte voneinander sind; und
die erste Subtrahiereinrichtung (104) konfiguriert ist, um das digitale Empfangssignal zu empfangen, das erste Selbststörungssignal von dem digitalen Empfangssignal zu subtrahieren, um ein digitales Empfangssignal nach einer ersten Stufe der Interferenzunterdrückung zu erhalten und das digitale Empfangssignal nach der ersten Stufe der Interferenzunterdrückung an das zweite Interferenzunterdrückungsmodul zu senden.

3. Digitale Interferenzunterdrückungsvorrichtung nach Anspruch 2, wobei der erste Filter (102) umfasst:
eine erste Empfangseinheit, die konfiguriert ist, um das erste Referenzsignal zu empfangen und das erste Referenzsignal an eine erste Filtereinheit zu senden;
eine erste Koeffizienten-Erlangungseinheit, die konfiguriert ist, um einen ersten Filterkoeffizienten zu erhalten und den ersten Filterkoeffizienten an die erste Filtereinheit zu senden;
die erste Filtereinheit, die konfiguriert ist, um in Kombination mit dem ersten Filterkoeffizienten durch Verwenden der Abtastdauer des ersten Referenzsignals als einen Verzögerungsschritt einer Abgriff-Verzögerungsleitung das erste Referenzsignal zu filtern, um das dritte Selbststörungssignal zu rekonstruieren, wobei eine Abtastdauer des ersten Referenzsignals gleich einem Kehrwert einer Abtastrate der ersten Aufwärtsabtasteinheit ist; und
eine erste Sendeeinheit, die konfiguriert ist, um das dritte Selbststörungssignal an die Abwärtsabtasteinheit zu senden.

4. Digitale Interferenzunterdrückungsvorrichtung nach Anspruch 3, wobei das erste Interferenzunterdrückungsmodul ferner eine zweite Aufwärtsabtasteinheit und eine erste Algorithmuseinheit umfasst;
ein Eingangsende der zweiten Aufwärtsabtasteinheit mit dem ersten Eingangsende der digitalen Interferenzunterdrückungsvorrichtung verbunden ist und ein Ausgangsende der zweiten Aufwärtsabtasteinheit mit einem ersten Eingangsende der ersten Algorithmuseinheit verbunden ist;
ein zweites Eingangsende der ersten Algorithmuseinheit mit dem Ausgangsende der ersten Aufwärtsabtasteinheit (101) verbunden ist und ein Ausgangsende der ersten Algorithmuseinheit mit einem Koeffizienteneingangsende des ersten Filters (102) verbunden ist;
die zweite Aufwärtsabtasteinheit konfiguriert ist, um das digitale Empfangssignal zu empfangen, das digitale Empfangssignal aufwärts abzutasten und ein erstes Empfangssignal an die erste Algorithmuseinheit auszugeben, wobei eine Abtastrate der zweiten Aufwärtsabtasteinheit gleich der Abtastrate der ersten Aufwärtsabtasteinheit (101) ist; und
die erste Algorithmuseinheit konfiguriert ist, um den ersten Filterkoeffizienten gemäß dem ersten Referenzsignal und dem ersten Empfangssignal durch Übernahme eines adaptiven Filteralgorithmus zu schätzen und den ersten Filterkoeffizienten an die erste Koeffizienten-Erlangungseinheit des ersten Filters (102) zu senden.

5. Digitale Interferenzunterdrückungsvorrichtung nach Anspruch 4, wobei das Schätzen, durch die erste Algorithmuseinheit, des ersten Filterkoeffizienten durch Übernahme eines adaptiven Filteralgorithmus umfasst:
Quadrieren eines Differenzwerts zwischen dem ersten Empfangssignal und dem ersten Referenzsignal durch Verwenden des ersten Empfangssignals als einen erwarteten Wert und Minimieren des erhaltenen Quadratwerts, um den ersten Filterkoeffizienten zu erhalten.

6. Digitale Interferenzunterdrückungsvorrichtung nach Anspruch 1, wobei das erste Interferenzunterdrückungsmodul eine erste Aufwärtsabtasteinheit, einen dritten Filter, eine Abwärtsabtasteinheit und eine erste Addiereinrichtung umfasst;
ein erstes Eingangsende der ersten Addiereinrichtung mit einem ersten Eingangsende der digitalen Interferenzunterdrückungsvorrichtung verbunden ist;
ein Eingangsende der ersten Aufwärtsabtasteinheit mit einem zweiten Eingangsende der digitalen Interferenzunterdrückungsvorrichtung verbunden ist und ein Ausgangsende der ersten Aufwärtsabtasteinheit mit einem Eingangsende des dritten Filters verbunden ist;
ein Ausgangsende des dritten Filters mit einem Eingangsende der Abwärtsabtasteinheit verbunden ist, ein Ausgangsende der Abwärtsabtasteinheit mit einem zweiten Eingangsende der ersten Addiereinrichtung verbunden ist und ein Ausgangsende der ersten Addiereinrichtung als ein Ausgangsende des ersten Interferenzunterdrückungsmoduls dient;
die erste Aufwärtsabtasteinheit konfiguriert ist, um ein digitales Übertragungssignal als ein digitales Basisbandreferenzsignal zu empfangen, das digitale Basisbandreferenzsignal aufwärts abzutasten und ein erstes Referenzsignal an den dritten Filter auszugeben, wobei eine Abtastrate der ersten Aufwärtsabtasteinheit größer als eine Abtastrate des digitalen Übertragungssignals ist;
der dritte Filter konfiguriert ist, um das erste Referenzsignal zu empfangen, ein viertes Selbststörungssignal zu rekonstruieren und das vierte Selbststörungssignal an die Abwärtsabtasteinheit zu senden;
die Abwärtsabtasteinheit konfiguriert ist, um das vierte Selbststörungssignal abwärts abzutasten, um ein negatives erstes Selbststörungssignal zu erhalten und das negative erste Selbststörungssignal an die ersten Addiereinrichtung zu senden, wobei eine Abtastrate der Abwärtsabtasteinheit und die Abtastrate der ersten Aufwärtsabtasteinheit Kehrwerte voneinander sind; und
die erste Addiereinrichtung konfiguriert ist, um das digitale Empfangssignal zu empfangen, das digitale Empfangssignal mit dem negativen ersten Selbststörungssignal zu addieren, um ein digitales Empfangssignal nach einer ersten Stufe der Interferenzunterdrückung zu erhalten und das digitale Empfangssignal nach der ersten Stufe der Interferenzunterdrückung an das zweite Interferenzunterdrückungsmodul zu senden.

7. Digitale Interferenzunterdrückungsvorrichtung nach einem der Ansprüche 1 bis 6, wobei das zweite Interferenzunterdrückungsmodul einen zweiten Filter (201) und eine zweite Subtrahiereinrichtung (202) umfasst;
ein Eingangsende des zweiten Filters (201) mit dem zweiten Eingangsende der digitalen Interferenzunterdrückungsvorrichtung verbunden ist und ein Ausgangsende des zweiten Filters (201) mit einem negativen Eingangsende der zweiten Subtrahiereinrichtung (202) verbunden ist;
ein positives Eingangsende der zweiten Subtrahiereinrichtung (202) mit dem Ausgangsende des ersten Interferenzunterdrückungsmoduls verbunden ist und ein Ausgangsende der zweiten Subtrahiereinrichtung (202) mit einem Ausgangsende der digitalen Interferenzunterdrückungsvorrichtung verbunden ist;
der zweite Filter (201) konfiguriert ist, um ein zweites Selbststörungssignal unter Verwendung des digitalen Basisbandreferenzsignals zu rekonstruieren und das zweite Selbststörungssignal an die zweite Subtrahiereinrichtung (202) zu senden; und die zweite Subtrahiereinrichtung (202) konfiguriert ist, um das zweite Selbststörungssignal von dem digitalen Empfangssignal nach der ersten Stufe der Interferenzunterdrückung zu subtrahieren, um ein digitales Empfangssignal nach einer zweiten Stufe der Interferenzunterdrückung zu erhalten und das digitale Empfangssignal nach der zweiten Stufe der Interferenzunterdrückung an den Prozessor für das digitale Empfangssignal zu senden.

8. Digitale Interferenzunterdrückungsvorrichtung nach Anspruch 7, wobei der zweite Filter (201) umfasst:
eine zweite Empfangseinheit, die konfiguriert ist, um das digitale Basisbandreferenzsignal zu empfangen und das digitale Basisbandreferenzsignal an eine zweite Filtereinheit zu senden;
eine zweite Koeffizienten-Erlangungseinheit, die konfiguriert ist, um einen zweiten Filterkoeffizienten zu erhalten und den zweiten Filterkoeffizienten an die zweite Filtereinheit zu senden;
die zweite Filtereinheit, die konfiguriert ist, um in Kombination mit dem zweiten Filterkoeffizienten durch Verwenden der Abtastdauer des digitalen Basisbandreferenzsignal als einen Verzögerungsschritt einer Abgriff-Verzögerungsleitung das digitale Basisbandreferenzsignal zu filtern, um das zweite Selbststörungssignal zu rekonstruieren; und
eine zweite Sendeeinheit, die konfiguriert ist, um das zweite Selbststörungssignal an die zweite Subtrahiereinrichtung zu senden.

9. Digitale Interferenzunterdrückungsvorrichtung nach Anspruch 8, wobei das zweite Interferenzunterdrückungsmodul ferner eine zweite Algorithmuseinheit (203) umfasst;
ein erstes Eingangsende der zweiten Algorithmuseinheit (203) mit dem ersten Eingangsende der digitalen Interferenzunterdrückungsvorrichtung verbunden ist, ein zweites Eingangsende der zweiten Algorithmuseinheit (203) mit dem Ausgangsende der zweiten Subtrahiereinrichtung (202) verbunden ist und ein Ausgangsende der zweiten Algorithmuseinheit (203) mit einem Koeffizienteneingangsende des zweiten Filters (201) verbunden ist; und
die zweite Algorithmuseinheit (203) konfiguriert ist, um den zweiten Filterkoeffizienten durch Kanalschätzung gemäß dem digitalen Empfangssignal nach der zweiten Stufe der Interferenzunterdrückung, das von der zweiten Subtrahiereinrichtung (202) ausgegeben wird, sowie dem digitale Basisbandreferenzsignal durch Kanalschätzung zu schätzen und den zweiten Filterkoeffizienten an die zweite Koeffizienten-Erlangungseinheit des zweiten Filters (201) zu senden.

10. Digitale Interferenzunterdrückungsvorrichtung nach einem der Ansprüche 1 bis 6, wobei das zweite Interferenzunterdrückungsmodul einen vierten Filter und eine zweite Addiereinrichtung umfasst;
ein Eingangsende des vierten Filters mit dem zweiten Eingangsende der digitalen Interferenzunterdrückungsvorrichtung verbunden ist und ein Ausgangsende des vierten Filters mit einem ersten Eingangsende der zweiten Addiereinrichtung verbunden ist;
ein zweites Eingangsende der zweiten Addiereinrichtung mit dem Ausgangsende des ersten Interferenzunterdrückungsmoduls verbunden ist und ein Ausgangsende der zweiten Addiereinrichtung mit dem Ausgangsende der digitalen Interferenzunterdrückungsvorrichtung verbunden ist;
der vierte Filter konfiguriert ist, um ein negatives zweites Selbststörungssignal unter Verwendung des digitalen Basisbandreferenzsignals zu rekonstruieren und das negative zweite Selbststörungssignal an die zweite Addiereinrichtung zu senden; und die zweite Addiereinrichtung konfiguriert ist, um das digitale Empfangssignal nach der ersten Stufe der Interferenzunterdrückung mit dem negativen zweiten Selbststörungssignal zu addieren, um ein digitales Empfangssignal nach einer zweiten Stufe der Interferenzunterdrückung zu erhalten und das digitale Empfangssignal nach der zweiten Stufe der Interferenzunterdrückung an den Prozessor des digitalen Empfangssignals zu senden.

11. Digitales Interferenzunterdrückungsverfahren für einen Sender-Empfänger eines drahtlosen Vollduplexsystems, umfassend:
Empfangen (S100) eines von dem Sender-Empfänger ausgegebenen digitalen Übertragungssignals als ein digitales Basisbandreferenzsignal;
Rekonstruieren (S200) eines ersten Selbststörungssignals durch Aufwärtsabtasten, Filtern und anschließendem Abwärtswandeln des digitalen Basisbandreferenzsignals;
Subtrahieren (S300) des ersten Selbststörungssignals von einem von dem Sender-Empfänger empfangenen digitalen Empfangssignal, um ein digitales Empfangssignal nach einer ersten Stufe der Interferenzunterdrückung zu erhalten;
Rekonstruieren (S400) eines zweiten Selbststörungssignals durch Filtern des digitalen Basisbandreferenzsignals; und
Subtrahieren (S500) des zweiten Selbststörungssignals von dem digitalen Empfangssignal, um ein digitales Empfangssignal nach einer zweiten Stufe der Interferenzunterdrückung zu erhalten und Senden des digitalen Empfangssignals nach der zweiten Stufe der Interferenzunterdrückung an den Sender-Empfänger;
wobei das erste Selbststörungssignal ein Nahfeld-Selbststörungssignal ist und das zweite Selbststörungssignal ein Fernfeld-Selbststörungssignal ist.

12. Verfahren nach Anspruch 11, wobei das Rekonstruieren (S200) eines ersten Selbststörungssignals unter Verwendung des digitalen Basisbandreferenzsignals umfasst:
Aufwärtsabtasten des digitalen Basisbandreferenzsignals, um ein erstes Referenzsignal zu erhalten, wobei eine Abtastrate der Aufwärtsabtastung größer als eine Abtastrate des digitalen Übertragungssignals ist;
Rekonstruieren eines dritten Selbststörungssignals unter Verwendung des ersten Referenzsignals; und
Abwärtsabtasten des dritten Selbststörungssignals, um das erste Selbststörungssignal zu erhalten, wobei eine Abtastrate der Abwärtsabtastung und die Abtastrate der Aufwärtsabtastung des digitalen Basisbandreferenzsignals Kehrwerte voneinander sind.

13. Verfahren nach Anspruch 12, wobei das Rekonstruieren eines dritten Selbststörungssignals unter Verwendung des ersten Referenzsignals umfasst:
Erhalten eines ersten Filterkoeffizienten; und
Filtern, in Kombination mit dem ersten Filterkoeffizienten durch Verwenden der Abtastdauer des Hochgeschwindigkeits-Referenzsignals als einen Verzögerungsschritt einer Abgriff-Verzögerungsleitung, des ersten Referenzsignals, um das dritte Selbststörungssignal zu rekonstruieren;
wobei eine Abtastdauer des ersten Referenzsignals gleich einem Kehrwert der Abtastrate der Aufwärtsabtastung des digitalen Basisbandreferenzsignals ist.

14. Verfahren nach Anspruch 12, wobei das Erhalten eines ersten Filterkoeffizienten umfasst:
Aufwärtsabtasten des digitalen Empfangssignals, um ein erstes Empfangssignal zu erhalten, wobei eine Abtastrate der Aufwärtsabtastung des digitalen Empfangssignals gleich einer Abtastrate der Aufwärtsabtastung ist, die auf dem digitalen Basisbandreferenzsignal durchgeführt wird; und
Schätzen des ersten Filterkoeffizienten gemäß dem ersten Referenzsignal und dem ersten Empfangssignal durch Übernahme eines adaptiven Filteralgorithmus.

15. Verfahren nach Anspruch 14, wobei das Schätzen des ersten Filterkoeffizienten durch Übernahme eines adaptiven Filteralgorithmus umfasst:
Quadrieren eines Differenzwerts zwischen dem ersten Empfangssignal und dem ersten Referenzsignal durch Verwenden des ersten Empfangssignals als einen erwarteten Wert und Minimieren des erhaltenen Quadratwerts, um den ersten Filterkoeffizienten zu erhalten.

16. Verfahren nach einem der Ansprüche 11 bis 15, wobei das Rekonstruieren (S400) eines zweiten Selbststörungssignals unter Verwendung des digitalen Basisbandreferenzsignals umfasst:
Erhalten eines zweiten Filterkoeffizienten; und
Filtern, in Kombination mit dem zweiten Filterkoeffizienten durch Verwenden der Abtastdauer des digitalen Basisbandreferenzsignal als einen Verzögerungsschritt der Abgriff-Verzögerungsleitung, des digitalen Basisbandreferenzsignals, um das zweite Selbststörungssignal zu rekonstruieren.

17. Verfahren nach Anspruch 16, wobei das Erhalten eines zweiten Filterkoeffizienten umfasst:
Schätzen des zweiten Filterkoeffizienten durch Kanalschätzung gemäß dem digitalen Empfangssignal nach der zweiten Stufe der Interferenzunterdrückung sowie dem digitalen Basisbandreferenzsignal.

18. Sender-Empfänger eines drahtlosen Vollduplexsystems, wobei der Sender-Empfänger die digitale Interferenzunterdrückungsvorrichtung nach einem der Ansprüche 1 bis 10 umfasst.

19. Drahtloses Vollduplexsystem, umfassend den Sender-Empfänger nach Anspruch 18.

## Revendications

1. Appareil d'annulation de brouillage numérique, l'appareil étant appliqué à un émetteur-récepteur d'un système duplex intégral sans fil ; et
l'appareil d'annulation de brouillage numérique comprenant :
un premier module d'annulation de brouillage (101, 102, 103, 104) et un deuxième module d'annulation de brouillage (201, 202) ;
le premier module d'annulation de brouillage étant configuré pour recevoir un signal de transmission numérique émis par l'émetteur-récepteur en tant que signal de référence en bande de base numérique, reconstruire un premier signal autobrouilleur par sur-échantillonnage, filtrage puis sous-échantillonnage du signal de référence en bande de base numérique, soustraire le premier signal autobrouilleur d'un signal de réception numérique reçu de l'émetteur-récepteur pour obtenir un signal de réception numérique après une première étape d'annulation de brouillage et envoyer le signal de réception numérique après la première étape d'annulation de brouillage au deuxième module d'annulation de brouillage ; et
le deuxième module d'annulation de brouillage étant configuré pour recevoir le signal de transmission numérique émis par l'émetteur-récepteur en tant que signal de référence en bande de base numérique, reconstruire un deuxième signal autobrouilleur par filtrage du signal de référence en bande de base numérique, soustraire le deuxième signal autobrouilleur du signal de réception numérique après la première étape d'annulation de brouillage pour obtenir un signal de réception numérique après une deuxième étape d'annulation de brouillage, et envoyer le signal de réception numérique après la deuxième étape d'annulation de brouillage à l'émetteur-récepteur ;
le premier signal autobrouilleur étant un signal autobrouilleur en champ proche, et le deuxième signal autobrouilleur étant un signal autobrouilleur en champ lointain.

2. Appareil d'annulation de brouillage numérique selon la revendication 1, le premier module d'annulation de brouillage comprenant une première unité de sur-échantillonnage (101), un premier filtre (102), une unité de sous-échantillonnage (103) et un premier soustracteur (104) ;
une extrémité d'entrée positive du premier soustracteur (104) étant connectée à une première extrémité d'entrée de l'appareil d'annulation de brouillage numérique ; une extrémité d'entrée de la première unité de sur-échantillonnage (101) étant connectée à une deuxième extrémité d'entrée de l'appareil d'annulation de brouillage numérique, et une extrémité de sortie de la première unité de sur-échantillonnage (101) étant connectée à une extrémité d'entrée du premier filtre (102) ;
une extrémité de sortie du premier filtre (102) étant connectée à une extrémité d'entrée de l'unité de sous-échantillonnage (103), une extrémité de sortie de l'unité de sous-échantillonnage (103) étant connectée à une extrémité d'entrée négative du premier soustracteur (104), et une extrémité de sortie du premier soustracteur (104) étant utilisée en tant qu'extrémité de sortie du premier module d'annulation de brouillage ;
la première unité de sur-échantillonnage (101) étant configurée pour recevoir le signal de transmission numérique en tant que signal de référence en bande de base numérique, sur-échantillonner le signal de référence en bande de base numérique et délivrer un premier signal de référence au premier filtre, une fréquence d'échantillonnage de la première unité de sur-échantillonnage étant supérieure à une fréquence d'échantillonnage du signal de transmission numérique ;
le premier filtre (102) étant configuré pour recevoir le premier signal de référence, reconstruire un troisième signal autobrouilleur et envoyer le troisième signal autobrouilleur à l'unité de sous-échantillonnage (103) ;
l'unité de sous-échantillonnage (103) étant configurée pour sous-échantillonner le troisième signal autobrouilleur pour obtenir un premier signal autobrouilleur, et envoyer le premier signal autobrouilleur au premier soustracteur (104), une fréquence d'échantillonnage de l'unité de sous-échantillonnage (103) et la fréquence d'échantillonnage de la première unité de sur-échantillonnage (101) étant inverses l'une de l'autre ; et
le premier soustracteur (104) étant configuré pour recevoir le signal de réception numérique, soustraire le premier signal autobrouilleur du signal de réception numérique pour obtenir un signal de réception numérique après une première étape d'annulation de brouillage, et envoyer le signal de réception numérique après la première étape d'annulation de brouillage au deuxième module d'annulation de brouillage.

3. Appareil d'annulation de brouillage numérique selon la revendication 2, le premier filtre (102) comprenant :
une première unité de réception, configurée pour recevoir le premier signal de référence et envoyer le premier signal de référence à une première unité de filtrage ;
une première unité d'obtention de coefficients, configurée pour obtenir un premier coefficient de filtrage, et envoyer le premier coefficient de filtrage à la première unité de filtrage ;
la première unité de filtrage, configurée pour filtrer, en combinaison avec le premier coefficient de filtrage en prenant la période d'échantillonnage du premier signal de référence comme étape de retard d'une ligne à retard de prise, le premier signal de référence pour reconstruire le troisième signal autobrouilleur, une période d'échantillonnage du premier signal de référence étant égale à l'inverse d'une fréquence d'échantillonnage de la première unité de sur-échantillonnage ; et
une première unité d'envoi, configurée pour envoyer le troisième signal autobrouilleur à l'unité de sous-échantillonnage.

4. Appareil d'annulation de brouillage numérique selon la revendication 3, le premier module d'annulation de brouillage comprenant en outre une deuxième unité de sur-échantillonnage et une première unité algorithmique ;
une extrémité d'entrée de la deuxième unité de sur-échantillonnage étant connectée à la première extrémité d'entrée de l'appareil d'annulation de brouillage numérique, et une extrémité de sortie de la deuxième unité de sur-échantillonnage étant connectée à une première extrémité d'entrée de la première unité algorithmique ;
une deuxième extrémité d'entrée de la première unité algorithmique étant connectée à l'extrémité de sortie de la première unité de sur-échantillonnage (101), et une extrémité de sortie de la première unité algorithmique étant connectée à une extrémité d'entrée de coefficient du premier filtre (102) ;
la deuxième unité de sur-échantillonnage étant configurée pour recevoir le signal de réception numérique, sur-échantillonner le signal de réception numérique et délivrer un premier signal de réception à la première unité algorithmique, une fréquence d'échantillonnage de la deuxième unité de sur-échantillonnage étant égale à la fréquence d'échantillonnage de la première unité de sur-échantillonnage (101) ; et
la première unité algorithmique étant configurée pour estimer le premier coefficient de filtrage en fonction du premier signal de référence et du premier signal de réception en adoptant un algorithme de filtrage adaptatif, et envoyer le premier coefficient de filtrage à la première unité d'obtention de coefficients du premier filtre (102).

5. Appareil d'annulation de brouillage numérique selon la revendication 4, l'estimation, par la première unité algorithmique, du premier coefficient de filtrage en adoptant un algorithme de filtrage adaptatif, comprenant :
la mise au carrée d'une valeur de différence entre le premier signal de réception et le premier signal de référence en prenant le premier signal de réception comme valeur attendue, et en minimisant la valeur mise au carré obtenue pour obtenir le premier coefficient de filtrage.

6. Appareil d'annulation de brouillage numérique selon la revendication 1, le premier module d'annulation de brouillage comprenant une première unité de sur-échantillonnage, un troisième filtre, une unité de sous-échantillonnage et un premier additionneur ;
une première extrémité d'entrée du premier additionneur étant connectée à une première extrémité d'entrée de l'appareil d'annulation de brouillage numérique ; une extrémité d'entrée de la première unité de sur-échantillonnage étant connectée à une deuxième extrémité d'entrée de l'appareil d'annulation de brouillage numérique, et une extrémité de sortie de la première unité de sur-échantillonnage étant connectée à une extrémité d'entrée du troisième filtre ;
une extrémité de sortie du troisième filtre étant connectée à une extrémité d'entrée de l'unité de sous-échantillonnage, une extrémité de sortie de l'unité de sous-échantillonnage étant connectée à une deuxième extrémité d'entrée du premier additionneur, et une extrémité de sortie du premier additionneur étant utilisée comme extrémité de sortie du premier module d'annulation de brouillage ;
la première unité de sur-échantillonnage étant configurée pour recevoir un signal de transmission numérique en tant que signal de référence en bande de base numérique, sur-échantillonner le signal de référence en bande de base numérique et délivrer un premier signal de référence au troisième filtre, une fréquence d'échantillonnage de la première unité de sur-échantillonnage étant supérieure à une fréquence d'échantillonnage du signal de transmission numérique ;
le troisième filtre étant configuré pour recevoir le premier signal de référence, reconstruire un quatrième signal autobrouilleur et envoyer le quatrième signal autobrouilleur à l'unité de sous-échantillonnage ;
l'unité de sous-échantillonnage étant configurée pour sous-échantillonner le quatrième signal autobrouilleur pour obtenir un premier signal autobrouilleur négatif, et envoyer le premier signal autobrouilleur négatif au premier additionneur, une fréquence d'échantillonnage de l'unité de sous-échantillonnage et la fréquence d'échantillonnage de la première unité de sur-échantillonnage étant inverses l'une de l'autre ; et
le premier additionneur étant configuré pour recevoir le signal de réception numérique, ajouter le signal de réception numérique avec le premier signal autobrouilleur négatif pour obtenir un signal de réception numérique après une première étape d'annulation de brouillage, et envoyer le signal de réception numérique après la première étape d'annulation de brouillage au deuxième module d'annulation de brouillage.

7. Appareil d'annulation de brouillage numérique selon l'une quelconque des revendications 1 à 6, le deuxième module d'annulation de brouillage comprenant un deuxième filtre (201) et un deuxième soustracteur (202) ;
une extrémité d'entrée du deuxième filtre (201) étant connectée à la deuxième extrémité d'entrée de l'appareil d'annulation de brouillage numérique, et une extrémité de sortie du deuxième filtre (201) étant connectée à une extrémité d'entrée négative du deuxième soustracteur (202) ;
une extrémité d'entrée positive du deuxième soustracteur (202) étant connectée à l'extrémité de sortie du premier module d'annulation de brouillage, et une extrémité de sortie du deuxième soustracteur (202) étant connectée à une extrémité de sortie de l'appareil d'annulation de brouillage numérique ;
le deuxième filtre (201) étant configuré pour reconstruire un deuxième signal autobrouilleur en utilisant le signal de référence en bande de base numérique, et envoyer le deuxième signal autobrouilleur au deuxième soustracteur (202) ; et
le deuxième soustracteur (202) étant configuré pour soustraire le deuxième signal autobrouilleur du signal de réception numérique après la première étape d'annulation de brouillage pour obtenir un signal de réception numérique après une deuxième étape d'annulation de brouillage, et envoyer le signal de réception numérique après la deuxième étape d'annulation de brouillage au processeur du signal de réception numérique.

8. Appareil d'annulation de brouillage numérique selon la revendication 7, le deuxième filtre (201) comprenant :
une deuxième unité de réception, configurée pour recevoir le signal de référence en bande de base numérique, et envoyer le signal de référence en bande de base numérique à une deuxième unité de filtrage ;
une deuxième unité d'obtention de coefficients, configurée pour obtenir un deuxième coefficient de filtrage, et envoyer le deuxième coefficient de filtrage à la deuxième unité de filtrage ;
la deuxième unité de filtrage, configurée pour filtrer, en combinaison avec le deuxième coefficient de filtrage en prenant une période d'échantillonnage du signal de référence en bande de base numérique comme étape de retard d'une ligne à retard de prise, le signal de référence en bande de base numérique pour reconstruire le deuxième signal autobrouilleur ; et
une deuxième unité d'envoi, configurée pour envoyer le deuxième signal autobrouilleur au deuxième soustracteur.

9. Appareil d'annulation de brouillage numérique selon la revendication 8, le deuxième module d'annulation de brouillage comprenant en outre une deuxième unité algorithmique (203) ;
une première extrémité d'entrée de la deuxième unité algorithmique (203) étant connectée à la première extrémité d'entrée de l'appareil d'annulation de brouillage numérique, une deuxième extrémité d'entrée de la deuxième unité algorithmique (203) étant connectée à l'extrémité de sortie du deuxième soustracteur (202), et une extrémité de sortie de la deuxième unité algorithmique (203) étant connectée à une extrémité d'entrée de coefficient du deuxième filtre (201) ; et
la deuxième unité algorithmique (203) étant configurée pour estimer le deuxième coefficient de filtrage par estimation de canal selon le signal de réception numérique après la deuxième étape de sortie d'annulation de brouillage par le deuxième soustracteur (202) ainsi que le signal de référence en bande de base numérique par estimation de canal, et envoyer le deuxième coefficient de filtrage à la deuxième unité d'obtention de coefficients du deuxième filtre (201).

10. Appareil d'annulation de brouillage numérique selon l'une quelconque des revendications 1 à 6, le deuxième module d'annulation de brouillage comprenant un quatrième filtre et un deuxième additionneur ;
une extrémité d'entrée du quatrième filtre étant connectée à la deuxième extrémité d'entrée de l'appareil d'annulation de brouillage numérique, et une extrémité de sortie du quatrième filtre étant connectée à une première extrémité d'entrée du deuxième additionneur ;
une deuxième extrémité d'entrée du deuxième additionneur étant connectée à l'extrémité de sortie du premier module d'annulation de brouillage, et une extrémité de sortie du deuxième additionneur étant connectée à l'extrémité de sortie de l'appareil d'annulation de brouillage numérique ;
le quatrième filtre étant configuré pour reconstruire un deuxième signal autobrouilleur négatif en utilisant le signal de référence en bande de base numérique, et envoyer le deuxième signal autobrouilleur négatif au deuxième additionneur ; et le deuxième additionneur étant configuré pour ajouter le signal de réception numérique après la première étape d'annulation de brouillage avec le deuxième signal autobrouilleur négatif pour obtenir un signal de réception numérique après une deuxième étape d'annulation de brouillage, et envoyer le signal de réception numérique après la deuxième étape d'annulation de brouillage au processeur du signal de réception numérique.

11. Procédé d'annulation de brouillage numérique pour un émetteur-récepteur d'un système duplex intégral sans fil, comprenant :
la réception (S100) d'un signal de transmission numérique émis par l'émetteur-récepteur comme signal de référence en bande de base numérique ;
la reconstruction (S200) d'un premier signal autobrouilleur par sur-échantillonnage, filtrage puis sous-conversion du signal de référence en bande de base numérique ;
la soustraction (S300) du premier signal autobrouilleur d'un signal de réception numérique reçu de l'émetteur-récepteur pour obtenir un signal de réception numérique après une première étape d'annulation de brouillage ;
la reconstruction (S400) d'un deuxième signal autobrouilleur par filtrage du signal de référence en bande de base numérique ; et
la soustraction (S500) du deuxième signal autobrouilleur du signal de réception numérique après la première étape d'annulation de brouillage pour obtenir un signal de réception numérique après une deuxième étape d'annulation de brouillage, et
l'envoi du signal de réception numérique après la deuxième étape d'annulation de brouillage à l'émetteur-récepteur ;
le premier signal autobrouilleur étant un signal autobrouilleur en champ proche, et le deuxième signal autobrouilleur étant un signal autobrouilleur en champ lointain.

12. Procédé selon la revendication 11, la reconstruction (S200) d'un premier signal autobrouilleur en utilisant le signal de référence en bande de base numérique comprenant :
le sur-échantillonnage du signal de référence en bande de base numérique pour obtenir un premier signal de référence, une fréquence d'échantillonnage du sur-échantillonnage étant supérieure à une fréquence d'échantillonnage du signal de transmission numérique ;
la reconstruction d'un troisième signal autobrouilleur en utilisant le premier signal de référence ; et
le sous-échantillonnage du troisième signal autobrouilleur pour obtenir le premier signal autobrouilleur, une fréquence d'échantillonnage de sous-échantillonnage et la fréquence d'échantillonnage de sur-échantillonnage du signal de référence en bande de base numérique étant inverses l'une de l'autre.

13. Procédé selon la revendication 12, la reconstruction d'un troisième signal autobrouilleur en utilisant le premier signal de référence, comprenant :
l'obtention d'un premier coefficient de filtrage ; et
le filtrage, en combinaison avec le premier coefficient de filtrage en prenant une période d'échantillonnage du signal de référence à grande vitesse comme étape de retard d'une ligne à retard de prise, du premier signal de référence pour reconstruire le troisième signal autobrouilleur ;
une période d'échantillonnage du premier signal de référence étant égale à l'inverse de la fréquence d'échantillonnage du sur-échantillonnage du signal de référence en bande de base numérique.

14. Procédé selon la revendication 12, l'obtention d'un premier coefficient de filtrage comprenant :
le sur-échantillonnage du signal de réception numérique pour obtenir un premier signal de réception, une fréquence d'échantillonnage de sur-échantillonnage du signal de réception numérique étant égale à une fréquence d'échantillonnage de sur-échantillonnage effectuée sur le signal de référence en bande de base numérique ; et
l'estimation du premier coefficient de filtrage en fonction du premier signal de référence et du premier signal de réception en adoptant un algorithme de filtrage adaptatif.

15. Procédé selon la revendication 14, l'estimation du premier coefficient de filtrage en adoptant un algorithme de filtrage adaptatif comprenant :
la mise au carré d'une valeur de différence entre le premier signal de réception et le premier signal de référence en prenant le premier signal de réception comme valeur attendue, et en minimisant la valeur mise au carré obtenue pour obtenir le premier coefficient de filtrage.

16. Procédé selon l'une quelconque des revendications 11 à 15, la reconstruction (S400) d'un deuxième signal autobrouilleur en utilisant le signal de référence en bande de base numérique comprenant :
l'obtention d'un deuxième coefficient de filtrage ; et
le filtrage en combinaison avec le deuxième coefficient de filtrage en prenant une période d'échantillonnage du signal de référence en bande de base numérique comme étape de retard de la ligne à retard de prise, du signal de référence en bande de base numérique pour reconstruire le deuxième signal autobrouilleur.

17. Procédé selon la revendication 16, l'obtention d'un deuxième coefficient de filtrage comprenant :
l'estimation du deuxième coefficient de filtrage par estimation de canal en fonction du signal de réception numérique après la deuxième étape d'annulation de brouillage ainsi que du signal de référence en bande de base numérique.

18. Émetteur-récepteur d'un système duplex intégral sans fil, l'émetteur-récepteur comprenant l'appareil d'annulation de brouillage numérique selon l'une quelconque des revendications 1 à 10.

19. Système duplex intégral sans fil, comprenant l'émetteur-récepteur selon la revendication 18.
